Europäisches Patentamt

European Patent Office

Office européen des brevets

(19)

(11) **EP 0 740 696 B1**

(12) **EUROPÄISCHE PATENTSCHRIFT**

(45) Veröffentlichungstag und Bekanntmachung des Hinweises auf die Patenterteilung:
**14.10.1998 Patentblatt 1998/42**

(21) Anmeldenummer: **95902787.1**

(22) Anmeldetag: **06.12.1994**

(51) Int Cl.⁶: **C11D 3/37**, C11D 3/33

(86) Internationale Anmeldenummer:
**PCT/EP94/04057**

(87) Internationale Veröffentlichungsnummer:
**WO 95/16020 (15.06.1995 Gazette 1995/25)**

(54) **Verwendung von Polyasparaginsäure in Waschmittel**

Use of polyasparaginic acid in washing agents

Utilisation d'acide polyaspartique dans des détergents

(84) Benannte Vertragsstaaten:
**AT BE CH DE DK ES FR GB IE IT LI NL PT SE**

(30) Priorität: **11.12.1993 DE 4342316**

(43) Veröffentlichungstag der Anmeldung:
**06.11.1996 Patentblatt 1996/45**

(73) Patentinhaber: **BASF AKTIENGESELLSCHAFT
67056 Ludwigshafen (DE)**

(72) Erfinder:
- **KRONER, Matthias
  D-67304 Eisenberg (DE)**
- **SCHORNICK, Gunnar
  D-67271 Neuleiningen (DE)**
- **BAUR, Richard
  D-67112 Mutterstadt (DE)**
- **KUD, Alexander
  D-55234 Eppelsheim (DE)**
- **SCHWENDEMANN, Volker
  D-67434 Neustadt (DE)**

(56) Entgegenhaltungen:
**EP-A- 0 454 126      EP-A- 0 561 452
EP-A- 0 612 842      WO-A-94/21695
DE-A- 4 310 995**

## Beschreibung

Die Erfindung betrifft die Verwendung von Polyasparaginsäure in Waschmitteln sowie Waschmittel, die Polyasparaginsäure enthalten.

Aus der EP-A-0 454 126 sind Waschmittel bekannt, die 10 bis 40 Gew.-% eines Tensids, 5 bis 50 Gew.-% mindestens eines Natriumaluminiumsilikats, 0,5 bis 70 Gew.-% mindestens eines üblicherweise verwendeten Additivs und 5 bis 50 Gew.-% mindestens einer Polyaminosäure, vorzugsweise Polyasparaginsäure oder Polygluta-minsäure, als Builder enthalten.

Aus der EP-A-0 511 037 sind Waschmittelformulierungen bekannt, die vorzugsweise ein Imid der Polyasparaginsäure und/oder der Polyglutaminsäure in Mengen von 0,2 bis 80 Gew.-% enthalten.

Wie aus den obengenannten Literaturstellen hervorgeht, sind die darin beschriebenen Polyaminocarbonsäuren und die entsprechenden Polyimide biologisch abbaubar. Nach Beispiel 9 der EP-A-0 511 037 wird für ein Polykondensat, das durch 6,5-stündiges Tempern von L-Asparaginsäure bei 220°C und anschließende Hydrolyse mit Natronlauge in wäßrigem Medium hergestellt wird, gemäß dem ISO-Test ein Abbaugrad von 75 % innerhalb von 28 Tagen ermittelt. Bestimmt man jedoch den Abbaugrad dieses Kondensats nach dem unten beschriebenen modifizierten Zahn-Wellens-Test, so findet man Abbaugrade zwischen 50 und 60 %. Die darüber hinaus bekannten Polykondensationsverfahren von Asparaginsäure führen zu Polyasparaginsäuren, die erhebliche Unterschiede in der biologischen Abbaubarkeit aufweisen.

Der vorliegenden Erfindung liegt die Aufgabe zugrunde, für den Einsatz in Waschmitteln Polyasparaginsäuren mit besonders guter biologischer Abbaubarkeit zur Verfügung zu stellen.

Die Aufgabe wird erfindungsgemäß gelöst mit der Verwendung von Polyasparaginsäure, die durch Polykondensation von Asparaginsäure in Gegenwart von Phosphorsäure in einem molaren Verhältnis von 1 : 0,05 bis 1 : 10 bei Temperaturen von mindestens 120°C zu Polysuccinimid und anschließende Hydrolyse des Polysuccinimids mit Basen zu mindestens teilweise neutralisierter Polyasparaginsäure hergestellt worden ist, als Zusatz zu Waschmittel in Mengen von 0,1 bis 10 Gew.-%, bezogen auf die Waschmittel.

Gegenstand der Erfindung sind außerdem Waschmittel, die mindestens ein Tensid, Polyasparaginsäure und gegebenenfalls sonstige übliche Bestandteile enthalten, wenn sie 0,1 bis 10 Gew.-% einer Polyasparaginsäure enthalten, die durch Polykondensation von Asparaginsäure in Gegenwart von Phosphorsäure in einem molaren Verhältnis von 1 : 0,05 bis 1 : 10 bei Temperaturen von mindestens 120°C zu Polysuccinimid und anschließende Hydrolyse des Polysuccinimids mit Basen zu mindestens teilweise neutralisierter Polyasparaginsäure hergestellt worden ist.

Während Polyasparaginsäuren, die durch thermische Kondensation von Asparaginsäure bei Temperaturen von beispielsweise 180 bis 220°C oder durch Umsetzung von Maleinsäure und Ammoniak im Molverhältnis 1 : 1 - 1,5 bei 120 - 150°C oder 200°C und Überführung in die Salzform herstellbar sind, Abbauraten von 50 bis 60% haben, betragen die Abbauraten von Polyasparaginsäure, die durch Polykondensation von Asparaginsäure in Gegenwart von Phosphor-säure hergestellt werden, mindestens 70, vorzugsweise mindestens 85% (jeweils bestimmt nach OECD Guidelines for Testing of Chemicals, 302 B, Modified Zahn-Wellens-Test, ISBN 92-64-12221-4, Paris 1981). Bei diesem Test wird die Abnahme des gelösten organischen Kohlenstoffs (DOC-Abnahme) in dem Prüfmedium nach DIN 38409, Teil 3 (1983) unter standardisierten Bedingungen bis zu 28 Tagen analysiert.

Die erfindungsgemäß zu verwendende Polyasparaginsäure oder ihre Salze werden nach bekannten Verfahren durch Kondensieren von Asparaginsäure in Gegenwart von Phosphorsäure hergestellt, vgl. Journal of Medicinal Chemistry, Vol. 16, 893 (1973) und DE-A-4 023 463. Die Reaktionstemperatur beträgt mindestens 120°C und liegt in den meisten Fällen in dem Bereich von 140 bis 250°C, vorzugsweise 160 - 240°C.

Das Molverhältnis von Asparaginsäure zu Phosphorsäure sollte in dem Bereich von 1 : 0,05 bis 1 : 10 liegen und beträgt vorzugsweise 1 : 1 bis 1 : 3. Als Phosphorsäure wird bevorzugt technische, 75 bis 85 %ige wäßrige ortho-Phosphorsäure eingesetzt. Man kann jedoch auch 100 %ige ortho-Phosphorsäure oder meta-Phosphorsäure verwenden. Ebenso sind polymere Anhydride der Phosphorsäure (Polyphosphorsäuren) einsetzbar, z.B. Diphosphorsäure (Pyrophosphorsäure), Triphosphorsäure und höhere Homologe der Phosphorsäure. Bei Einsatz überstöchiometrischer Mengen an Phosphorsäure wird die Polykondensationsreaktion in Phosphorsäure als Löse- und Verdünnungsmittel durchgeführt.

Die Polykondensation der Asparaginsäure in Gegenwart von Phosphorsäure kann nach allen bekannten Verfahren durchgeführt werden, z.B. in Phosphorsäure als Löse- und Verdünnungsmittel oder in der Schmelze, in dünner Schicht auf einem Band oder in einem Kneter. Die Polykondensation kann beispielsweise so vorgenommen werden, daß man zunächst Asparaginsäure in Phosphorsäure bei bis 100°C löst und dann im Vakuum auf die Polykondensationstemperatur erhitzt. Das mit der Phosphorsäure gegebenenfalls eingebrachte Wasser destilliert dabei ab, gleichzeitig löst sich die Asparaginsäure in der Phosphorsäure auf. Mit fortschreitender Polykondensation nimmt die Viskosität der Reaktionsmischung und parallel damit auch das Molekulargewicht der entstehenden Polykondensate zu. Man erhält homogene, sehr hochviskose Lösungen von Polyaspartimiden in Phosphorsäure.

Die Polykondensation wird vorzugsweise unter vermindertem Druck, z.B. bei 10 bis 100 mbar, oder unter einer Inertgasatmosphäre durchgeführt. Die bei der Polykondensation entstehenden Polyaspartimide (=Polysuccinimide) werden weitgehend oder vollständig z.B. durch Waschen mit Wasser von Phosphorsäure befreit. Die Phosphorsäure kann aus den Waschlösungen zurückgewonnen werden. Die Polysuccinimide werden in Wasser aufgeschlämmt und unter Zugabe einer Base hydrolysiert und zumindest teilweise neutralisiert. Die Hydrolyse kann durch Temperaturerhöhung beschleunigt werden. So kann man die Hydrolyse beispielsweise in dem Temperaturbereich von 40 bis 95°C relativ rasch durchführen.

Für die Hydrolyse und die zumindest teilweise Neutralisation eignen sich vor allem Alkalimetall- und Erdalkalimetallbasen, z.B. Natronlauge, Kalilauge, Soda, Kaliumcarbonat, Magnesiumhydroxid, Calciumhydroxid oder Bariumhydroxid. Außerdem sind auch Ammoniak und Amine einsetzbar, z.B. Trimethylamin, Triethylamin, Diethylamin, Ethanolamin, Diethanolamin, Triethanolamin und Morpholin. Hydrolyse und Neutralisation können durch Einwirkung von Ultraschall auf die Reaktionspartner beschleunigt werden. Für die Hydrolyse und die Neutralisation wird vorzugsweise Natronlauge verwendet. Die Hydrolyse erfolgt vorzugsweise in dem pH-Bereich von 8 bis 10. Man erhält partiell oder vollständig neutralisierte Polyasparaginsäuren. Bei einer partiellen Hydrolyse beträgt der Neutralisationsgrad vorzugsweise 70 bis 85 Mol-%.

Die Polyasparaginsäuren haben einen K-Wert von 10 bis 150 (bestimmt nach H. Fikentscher in 1 gew.-%iger wäßriger Lösung bei 25°C am Na-Salz und einem pH-Wert von 7). Die so erhältlichen Polyasparaginsäuren haben eine Molmasse $M_w$ von 1 000 bis 200 000 (bestimmt mittels Gelpermeationsschromatographie gegen Polyacrylsäure-Standards, geeicht mit Hilfe der Lichtstreuung). Die Molmasse $M_w$ beträgt vorzugsweise 1 200 bis 50 000.

Die durch Polykondensieren in Gegenwart von Phosphorsäure hergestellten Polyasparaginsäuren oder ihre Salze werden erfindungsgemäß als Zusatz zu Waschmitteln in Mengen von 0,1 bis 10, vorzugsweise 1 bis weniger als 5 Gew.-%, bezogen auf die Waschmittel, verwendet. Sie unterstützen die Primärwaschwirkung und wirken in der Waschflotte dispergierend auf abgelösten Schmutz. Die erfindungsgemäß zu verwendenden Polyasparaginsäuren haben gegenüber den nach anderen Verfahren herstellbaren Polyasparaginsäuren den Vorteil, daß sie überraschenderweise eine wesentlich bessere biologische Abbaubarkeit aufweisen.

Die Polyasparaginsäuren und ihre Salze werden in Waschmitteln eingesetzt, die mindestens ein Tensid und gegebenenfalls sonstige übliche Bestandteile enthalten. Vorzugsweise enthalten die Waschmittel solche Tenside, die vollständig biologisch abbaubar sind.

Die Waschmittel können pulverförmig sein oder auch in flüssiger Einstellung vorliegen. Die Zusammensetzung der Waschmittelformulierungen kann sehr unterschiedlich sein. Waschmittelformulierungen enthalten üblicherweise 2 bis 50 Gew.-% Tenside und gegebenenfalls Builder. Diese Angaben gelten sowohl für flüssige als auch für pulverförmige Waschmittel. Waschmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Waschmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Waschmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren und/oder Bleichaktivatoren.

Überraschenderweise besitzen Polyasparaginsäuren, die durch Polykondensation in Phosphorsäure hergestellt wurden, bessere dispergierende und die Primärwaschkraft verstärkende Wirkung als Polyasparaginsäuren, die in Abwesenheit von Phosphorsäure hergestellt werden.

Die K-Werte der Polyasparaginsäuren wurden nach H.Fikentscher, Cellulose-Chemie, Band 13, 58 bis 64 und 71 bis 74 (1932) in wäßriger Lösung bei einer Temperatur von 25°C und einer Konzentration von 1 Gew.-% bei pH 7 am Natriumsalz der Polyasparaginsäuren bestimmt.

Die Prozentangaben in den Beispielen sind Gewichtsprozent.


Beispiele


Herstellung von Polyasparaginsäure durch Kondensation in Gegenwart von Phosphorsäure


Kondensat 1


In einem Laborkneter wurde 1 kg L-Asparaginsäure mit einer Lösung von 37 g Phosphorsäure in 100 ml Wasser gemischt und unter Rühren der Masse im Vakuum der Wasserstrahlpumpe auf eine Temperatur von 164°C erhitzt und 8 Stunden bei der angegebenen Temperatur kondensiert. Danach ließ man das Reaktionsgemisch abkühlen und extrahierte die Phosphorsäure mit Wasser. Man erhielt ein feinteiliges Polysuccinimid.

Um das Polysuccinimid zu hydrolysieren, schlämmte man davon 100 g in 200 ml Wasser auf, erhitzte die Suspension auf 60°C und fügte 25 %ige wäßrige Natronlauge unter Einhaltung eines pH-Werts von 9 solange zu, bis eine klare wäßrige Lösung entstanden war. Der Neutralisationsgrad der Polyasparaginsäure betrug ca. 80 Mol-%. Der K-Wert der Polyasparaginsäure betrug 22.

Kondensat 2

In dem oben beschriebenen Laborkneter wurde 1 kg Asparaginsäure mit 98 g 75 %iger wäßriger Phosphorsäure im Molverhältnis 1 : 0,1 innerhalb von 3 Stunden bei einer Temperatur von 240°C im Vakuum kondensiert und anschließend nach der unter Kondensat 1 angegebenen Vorschrift hydrolysiert. Die Polyasparaginsäure hatte einen K-Wert von 26.

Kondensat 3

In einem beheizbaren Reaktor, der mit einem Rührer und einer Vorrichtung für das Arbeiten unter vermindertem Druck ausgestattet war, wurde 1 kg Asparaginsäure mit 1 kg 75 %iger wäßriger Phosphorsäure solange gerührt, bis eine homogene Lösung entstanden war. Der Reaktor wurde dann evakuiert und die Reaktionslösung unter Abdestillieren von Wasser auf eine Temperatur von 180°C erhitzt. Nach einer Kondensationszeit von 0,5 Stunden wurde das Reaktionsgemisch abgekühlt und, wie unter Kondensat 1 beschrieben, hydrolysiert und partiell neutralisiert. Die Polyasparaginsäure hatte einen K-Wert von 32 und einen Phosphorgehalt von 0,8 %.

Kondensat 4

Wie bei der Herstellung von Kondensat 3 angegeben, betrug das Verhältnis von Asparaginsäure zu Phosphorsäure 1 : 1, die Kondensationstemperatur jedoch 180°C und die Kondensationszeit 8 Stunden. Man erhielt eine Polyasparaginsäure mit einem K-Wert von 72.

Kondensat 5

Die unter Kondensat 3 beschriebene Herstellung wurde mit den Ausnahmen wiederholt, daß man Asparaginsäure in Gegenwart von Phosphorsäure im Molverhältnis 2 : 5 bei 160°C innerhalb von 6 Stunden kondensierte. Man erhielt eine Polyasparaginsäure mit einem K-Wert von 31. Sie hatte einen Restphosphorgehalt von 0,9 %.

Kondensat 6 (Vergleich)

In Anlehnung an die im Beispiel 1 der EP-A-0 511 037 beschriebene Herstellung von Polysuccinimid wurde teilchenförmige L-Asparaginsäure bei einer Temperatur von 220°C 6,5 Stunden in einem Trockenschrank thermisch kondensiert, wobei 95 % des Wassers entfernt wurden. Das Polysuccinimid wurde dann nach der Vorschrift, die unter Kondensat 1 angegeben ist, hydrolysiert. Man erhielt eine Polyasparaginsäure mit einem K-Wert von 26.

Kondensat 7 (Vergleich)

Nach dem in Comp.rend. 31, (1850), Seite 433 beschriebenen Verfahren wurde Polysuccinimid durch Umsetzung von Maleinsäure/Ammoniakaddukten bei 200°C hergestellt und nach der unter Kondensat 1 beschriebenen Methode hydrolysiert. Man erhielt eine Polyasparagin-säure mit einem K-Wert von 11.

Die oben beschriebenen Kondensate wurden nach dem modifizierten Zahn-Wellens-Test auf biologische Abbaubarkeit geprüft. Die Test-Methode ist beschrieben in OECD Guidelines for Testing of Chemicals, 302 B, Modified Zahn-Wellens-Test, ISBN 92-64-12221-4, Paris 1981. Bei diesem Test wird die Abnahme an gelöstem organischen Kohlenstoff (DOC-Abnahme) unter standardisierten Bedingungen gemessen. Es wurden jeweils Proben entnommen und auf DOC-Abnahme nach DIN 38409, Teil 3 (1983) analysiert. Die nach 3 Stunden, 10 Tagen und 28 Tagen erhaltenen Ergebnisse sind in Tabelle 1 angegeben.

Tabelle 1

| Kondensat | DOC-Abnahme (%) nach | | |
|---|---|---|---|
| Nr. | 3 Stdn. | 10 Tagen | 28 Tagen |
| 1 | 2 | 85 | >85 |
| 2 | 6 | 62 | 72 |
| 3 | 4 | 88 | 98 |

Tabelle 1 (fortgesetzt)

| Kondensat | DOC-Abnahme (%) nach | | |
|---|---|---|---|
| Nr. | 3 Stdn. | 10 Tagen | 28 Tagen |
| 4 | 3 | 78 | 99 |
| 5 | <2 | 90 | >90 |
| 6 (Vergl.) | 6 | 49 | 53 |
| 7 (Vergl.) | 4 | 50 | 50 |

Die Wirksamkeit der erfindungsgemäß zu verwendenden Polyasparaginsäuren als Zusatz zu Waschmitteln wurde mit Hilfe des Tests auf das Primärwaschvermögen ermittelt. Gemäß diesem Test wird das Tonablösevermögen von Textilgewebe an Hand von Waschversuchen untersucht. Tonmineralien sind gefärbt und geben bei einer Ablagerung auf dem Gewebe diesem einen Farbschleier. Um die Primärwaschwirkung von Ton auf dem Gewebe zu erfassen, wurde Baumwoll/Polyestergewebe mit einer Tonmischung bestehend aus je 33,3 % aus den Sorten 178/R (ockerfarben), 262 (braun) und 84/rf (rotbraun) der Fa. Carl Jäger, Hilgert, gleichmäßig beschichtet. Die Tonsorten sind unterschiedlich "fett"; d. h. sie unterscheiden sich im Gehalt an Aluminium-, Eisen- und Manganoxid. Die Tonmischischung wurde in Form einer 20 %igen Suspension in vollentsalztem Wasser unter kräftigem Umpumpen der Suspension homogen auf das Gewebe gebracht. Dies wurde mit einem Jigger der Fa. Küsters, Krefeld, bei 10 meter/min unter Verwendung von BW/PES[2]-Gewebe (33/67, Fa. Winkler, Waldshut) durchgeführt. Nach 3 Durchläufen wurde anschließend mit 600 l vollständig entsalztem Wasser ein Mal gespült. Danach wurde das nasse Gewebe in einem Spannrahmen bei 50°C und 2 meter/min Trockengeschwindigkeit getrocknet. Das auf diese Weise hergestellte Tongewebe enthält 1,76 % Ton, bestimmt durch Veraschung bei 700°C, 2,5 h.

Die Waschversuche wurden unter folgenden Bedingungen durchführt:

| Waschgerät: | Launder-o-meter |
|---|---|
| Anzahl der Waschzyklen: | 1 |
| Anzahl der Spülzyklen: | 1 |
| Anzahl der Waschversuche: | 6 |
| Waschtemperatur: | 20-24°C |
| Waschdauer: | 15 min |
| Flottenmenge: | 500 g VE[1]-Wasser + 80 ppm ethoxilierter Oxoalkohol (C13,15-Oxoalkohol + 8 Ethylenoxid) |
| Wasserhärte ($Ca^{2+}$ + $Mg^{2+}$): | 1 mmol/l |
| Molverhältnis: $Ca^{2+}:Mg^{2+}:HCO_3^-$: | 3:1:6 |
| pH: | $10 \pm 0,1$ |
| Testkonzentration des Polymer: | 80 ppm |
| Schmutzgewebe: | 5 g Tongewebe |
| Weißgewebe bzw. sauberes Gewebe: | 5 g PES/BW[2]-Gewebe |

[1] VE = vollständig entsalztes

[2] PES/BW = Polyester/Baumwolle

Nach dem Spülen wird geschleudert und die Gewebe zum Trocknen einzeln aufgehängt. Vermessen wird das Gewebe mit einem Elrepho 2000 der Fa. Data Color, Heidenheim, und zwar 6 Meßpunkte pro Gewebestück. Der für die Auswertung verwendete Wellenlängenbereich beträt 420 - 700 nm. Gemessen wird der Reflexionsgrad als Funktion der Wellenlänge. Als Referenz dient Bariumsulfat. Aus den Remissionswerten wird nach W. Baumann, R. Broßmann, B.T. Gröbel, N. Kleinemeier, M. Krayer, A.T. Leaver und H.-P. Oesch; Melliand Textilberichte 67 (1986), 562 ff. die Farbstärke mit Wichtung der Augenreizfunktion berechnet. Die genauen Berechnungsmethoden können aus Tenside, Surfactants, Detergents, 6, 1991, 497 ff. entnommen werden. Die Primärwaschwirkung in % wird nach der folgenden Gleichung berechnet:

$$P = (f_{s,b} - f_{s,a})/(f_{s,b} - f_{s,o}) * 100$$

$f_{s,b}$ = Farbstärke des angeschmutzten Gewebes (Tongewebe) vor dem Waschen.

$f_{s,a} =$     Farbstärke des angeschmutzten Gewebes nach dem Waschen.
$f_{s,o} =$     Farbstärke des sauberen Gewebes vor der Anschmutzung (Schmutzgewebe vor der Anschmutzung).

Die Verwendung der Farbstärke zur Berechnung der Primärwaschwirkung hat im Vergleich zur Remission bei einer Wellenlänge oder dem in der Literatur verwendeten K/S-Werten (K = Absorptionskoeffizient und S = Streukoeffizient) bei einer Wellenlänge den Vorteil, daß der sichtbare Bereich des Spektrums erfaßt wird und Schmutzpartikel aller Farben berücksichtigt werden. Die Testergebnisse sind in Tabelle 2 angegeben.

Tabelle 2

| Beispiel | Kondensat Nr. | Primärwaschwirkung P % (Mittelwert aus 6 Waschversuchen) |
|---|---|---|
| 1 | 3 | 84,7 |
| 2 | 2 | 81,4 |
| 3 | 4 | 93,0 |
| Vergleichsbeispiel | | |
| 1 | ohne Kondensat | 55,7 |
| 2 | 6 | 73,5 |
| 3 | 7 | 65,7 |

Praktisch vollständig biologisch abbaubare Polyasparginsäuren erhält man, wenn man die Polykondensation von Asparaginsäure in Gegenwart von Phosphorsäure im molaren Verhältnis von 1:0,05 bis 1:0,3 in Form einer Festphasenpolykondensation durchführt, vgl. Herstellung der Kondensate 8-10.

Kondensat 8

In dem Laborkneter werden 666 g (5 mol) Asparaginsäure mit 98 g (0,75 mol) 75%iger Phosphorsäure und 350 g Wasser zu einem Brei vermischt und unter Rühren und Durchleiten eines Stickstoffstromes auf 120°C erhitzt, wobei Wasser abdestilliert. Nach Beendigung der Destillation wird die Temperatur auf 180°C erhöht und das Gemisch 6 Stunden bei dieser Temperatur polykondensiert. Nach Beendigung der Polykondensation wird das Polykondensat mit Wasser extrahiert und durch Hydrolyse mittels Natronlauge in eine wäßrige Poly-Natriumaspartatlösung überführt. Der K-Wert beträgt 32,5 entsprechend einem Molgewicht $M_w$ = 9.000.

Kondensat 9

In einem Kneter werden 666 g (5 mol) Asparaginsäure mit 350 g Wasser und 130,7 g (1 mol) 75%iger Phosphorsäure wie bei Kondensat 8 beschrieben, polykondensiert, extrahiert und hydrolysiert. Der K-Wert des Poly-Natriumaspartats war 34,9 entsprechend einem Molgewicht $M_w$ von 10.500.

Kondensat 10

In einem Kneter werden 666 g (5 mol) Asparaginsäure mit 350 g Wasser und 177,6 g (1,36 mol) 75%iger Phosphorsäure wie bei Kondensat 8 behandelt und polykondensiert. Das Polykondensat wird wie beschrieben aufgearbeitet, extrahiert und hydrolysiert. Der K-Wert des Poly-Natriumaspartats beträgt 38,9 entsprechend einem Molgewicht $M_w$ 13.000.

**Patentansprüche**

1. Verwendung von Polyasparaginsäure, die durch Polykondensation von Asparaginsäure in Gegenwart von Phosphorsäure in einem molaren Verhältnis von 1 : 0,05 bis 1 : 10 bei Temperaturen von mindestens 120°C zu Polysuccinimid und anschließende Hydrolyse des Polysuccinimids mit Basen zu mindestens teilweise neutralisierter Polyasparaginsäure hergestellt worden ist, als Zusatz zu Waschmitteln in Mengen von 0,1 bis 10 Gew.-%, bezogen auf die Waschmittel.

2. Verwendung nach Anspruch 1, dadurch gekennzeichnet, daß die Polykondensation von Asparaginsäure in Gegenwart von Phosphor-säure in einem molaren Verhältnis von 1 : 1 bis 1 : 3 bei Temperaturen von 140 bis 250°C durchgeführt wird.

3. Verwendung nach Anspruch 1 oder 2, dadurch gekennzeichnet, daß die Waschmittel 1 bis weniger als 5 Gew.% der zumindest teilweise neutralisierten Polyasparaginsäure enthalten.

4. Waschmittel, die mindestens ein Tensid und Polyasparaginsäure und gegebenenfalls sonstige übliche Bei stand-teile enthalten, dadurch gekennzeichnet, daß sie 0,1 bis 10 Gew.-% einer Polyasparaginsäure enthalten, die durch Polykondensation von Asparaginsäure in Gegenwart von Phosphorsäure in einem molaren Verhältnis von 1 : 0,05 bis 1 : 10 bei Temperaturen von mindestens 120°C zu Polysuccinimid und anschließende Hydrolyse des Polysuccinimids mit Basen zu mindestens teilweise neutralisierter Polyasparaginsäure hergestellt worden ist.

5. Waschmittel nach Anspruch 4, dadurch gekennzeichnet, daß sie 1 bis weniger als 5 Gew.% Polyasparaginsäure enthalten.

## Claims

1. The use of polyaspartic acid prepared by polycondensation of aspartic acid in the presence of phosphoric acid in a molar ratio of from 1 : 0.05 to 1 : 10 at temperatures of at least 120°C to give polysuccinimide, and subsequent hydrolysis of the polysuccinimide with bases to give at least partially neutralized polyaspartic acid, as additive to detergents in amounts of from 0.1 to 10% by weight based on the detergents.

2. The use as claimed in claim 1, wherein the polycondensation of aspartic acid is carried out in the presence of phosphoric acid in a molar ratio of from 1 : 1 to 1 : 3 at from 140 to 250°C.

3. The use as claimed in claim 1 or 2, wherein the detergents contain from 1 to less than 5% by weight of the at least partially neutralized polyaspartic acid.

4. A detergent which contains at least one surfactant and polyaspartic acid with or without other conventional ingredients, which contains from 0.1 to 10% by weight of a polyaspartic acid which has been prepared by polycondensation of aspartic acid in the presence of phosphoric acid in a molar ratio of from 1 : 0.05 to 1 : 10 at temperatures of at least 120°C to give polysuccinimide, and subsequent hydro- lysis of the polysuccinimide with bases to give at least partially neutralized polyaspartic acid.

5. A detergent as claimed in claim 4, which contains from 1 to less than 5% by weight of polyaspartic acid.

## Revendications

1. Utilisation d'acide polyaspartique, préparé par polycondensation d'acide aspartique en présence d'acide phosphorique dans un rapport en moles de 1 : 0,05 à 1 : 10, à des températures d'au moins 120°C avec du polysuccinimide, suivie d'une hydrolyse du polysuccinimide à l'aide de bases pour donner de l'acide polyaspartique neutralisé de façon au moins partielle, en tant qu'additif pour des agents de lavage en des quantités de 0,1-10% en poids, par rapport à l'agent de lavage.

2. Utilisation selon la revendication 1, caractérisée en ce que l'on mène la polycondensation de l'acide aspartique en présence d'acide phosphorique dans un rapport en moles de 1 : 1 à 1 : 3, à des températures de 140-250°C.

3. Utilisation selon la revendication 1 ou 2, caractérisée en ce que les agents de lavage contiennent de 1 à moins de 5% en poids de l'acide polyaspartique neutralisé de façon au moins partielle.

4. Agents de lavage contenant au moins un tensio-actif et de l'acide polyaspartique et éventuellement d'autres constituants usuels, caractérisés en ce qu'ils contiennent 0,1-10% en poids d'un acide polyaspartique préparé par polycondensation d'acide aspartique en présence d'acide phosphorique dans un rapport en moles de 1 : 0,05 à 1 : 10, à des températures d'au moins 120°C avec du polysuccinimide, suivie d'une hydrolyse du polysuccinimide à l'aide de bases pour donner de l'acide polyaspartique neutralisé de façon au moins partielle.

5. Agents de lavage selon la revendication 4, caractérisés en ce qu'ils contiennent de 1 à moins de 5% en poids d'acide polyaspartique.